# EUROPÄISCHE PATENTANMELDUNG

(11) **EP 2 848 427 A1**
(43) Veröffentlichungstag der Anmeldung: **18.03.2015**
(21) Anmeldenummer: 12006011.6
(22) Anmeldetag: 23.08.2012
(51) Int. Cl.: B60B 27/00, B60B 27/02, B21K 1/40, B60B 1/00

(54) **Nabe**

(30) Priorität: 30.08.2011 DE 102011111487
(71) Anmelder: DT Swiss AG, 2504 Biel (CH)
(72) Erfinder: Spahr, Stefan, 2543 Lengnau (CH); Walthert, Martin, 3270 Aarberg (CH)
(74) Vertreter: BSB Intellectual Property Law

(57) **Zusammenfassung**

Nabe für zweiräder mit einem Nabengehäuse und Verfahren zur Hersteilung, wobei das Nabengehäuse über wenigstens ein Lager drehbar auf der Achse gelagert ist. Das Nabengehäuse umfasst ein erstes Schmiedeteil und ein zweites Schmiedeteil, wobei das erste und das zweite Schmiedeteil über wenigstens eine Hülse miteinander verbunden sind und wobei beide Schmiedeteile eine Vielzahl von nach außen abstehenden Befestigungsflanschen zur Befestigung von Speicheneinheiten aufweisen.

## Beschreibung

Die vorliegende Erfindung betrifft eine Nabe für wenigstens teilweise muskelbetriebene Fahrzeuge und insbesondere Zweiräder mit einer Achse und mit einem darauf drehbar gelagerten Nabengehäuses. Insbesondere betrifft die Erfindung eine Nabe für ein Fahrrad, wobei das Fahrrad gegebenenfalls eine Elektrounterstützung aufweisen kann.

Im Stand der Technik sind verschiedene Naben für muskelbetriebene Fahrzeuge wie z.B. Fahrräder bekannt geworden. Wichtige Parameter bei Naben im sportlichen und professionellen Bereich sind die Belastbarkeit und das Gewicht. Heutige Naben bestehen oftmals aus einem Leichtmetall oder einer Leichtmetalllegierung oder bestehen wenigstens teilweise aus einem Faserverbundwerkstoff, um Gewicht einzusparen. Um das Gewicht bei Naben aus Leichtmetall noch weiter zu senken, wird das Nabengehäuse aufwändig mechanisch spanabhebend durch Drehen und Fräsen bearbeitet. Dadurch wird an den Stellen, an denen Material und somit Gewicht eingespart werden kann, Material wunschgemäß entfernt, sodass eine gewichtsreduzierte und dennoch stabile Struktur vorliegt.

Solche Naben funktionieren zuverlässig und können ein geringes Gewicht aufweisen. Cer Vorteil des Gewichts wird aber durch eine aufwändige Bearbeitung und spanende Nachbearbeitung des Nabengehäuses erzielt. Dadurch werden hochwertige und leichte Naben teuer.

Es ist deshalb die Aufgabe der vorliegenden Erfindung eine Nabe zur Verfügung zu stellen, welche ein geringes Gewicht ermöglicht und welche günstiger zu fertigen ist.

Diese Aufgabe wird gelöst durch eine Nabe mit den Merkmalen des Anspruchs 1. Das erfindungsgemäße Verfahren zur Herstellung einer Nabe ist im Anspruch 17 angegeben. Bevorzugte Weiterbildungen und Ausgestaltungen ergeben sich aus den Unteransprüchen. Weitere Vorteile und Merkmale der Erfindung ergeben sich aus der allgemeinen Beschreibung und der Beschreibung der Ausführungsbeispiele.

Die erfindungsgemäße Nabe gemäß Anspruch 1 ist für wenigstens teilweise muskelbetriebene Fahrzeuge und insbesondere Zweiräder vorgesehen. Besonders bevorzugt wird sie für Fahrräder eingesetzt. Solche Fahrräder können eine Elektrounterstützung aufweisen. Die erfindungsgemäße Nabe weist ein Nabengehäuse und eine Achse auf, wobei das Nabengehäuse drehbar über wenigstens ein Lager auf der Achse gelagert ist. Das Nabengehäuse weist ein erstes Schmiedeteil und wenigstens ein zweites Schmiedeteil auf, wobei das erste mit dem zweiten Schmiedeteil über wenigstens eine Hülse verbunden ist. Wenigstens ein Schmiedeteil weist eine Vielzahl von nach außen abstehenden Befestigungsflanschen zur Befestigung von Speicheneinheiten auf.

Die erfindungsgemäße Nabe hat viele Vorteile. Ein erheblicher Vorteil der erfindungsgemäßen Nabe besteht darin, dass das Nabengehäuse ein erstes und ein zweites Schmiedeteil umfasst, die miteinander verbunden sind, wobei Befestigungsflansche zur Befestigung von Speicheneinheiten integriert sind. Dadurch wird ein geringes Gewicht bei hoher Belastbarkeit realisiert. Im Unterschied zu Naben, bei denen ein umlaufender Befestigungsflansch vorgesehen ist, kann erfindungsgemäß das Material dort stärker vorgesehen werden, wo es benötigt wird, während es zwischen den Anbringungspunkten der Speichen gar nicht vorhanden ist. Es wird ein einfaches und kostengünstiges Herstellverfahren ermöglicht, mit dem hochfeste Naben herstellbar sind. Eine Nachbearbeitung der geschmiedeten äußeren Flächen ist praktisch nicht nötig.

Vorteilhaft bei der erfindungsgemäßen Nabe ist auch die während des Umformens beim Schmieden erfolgende gezielte Änderung des Feingefüges, also der Kristallstruktur. Ein weiterer Vorteil ist der geringe Materialverlust, wodurch ein geringer Materialeinsatz erforderlich ist. Das erste und das zweite Schniedeteil werden insbesondere durch Gesenkschmieden hergestellt. Durch das dabei erfolgende spanlose Druckumformen werden die gesenkgeschmiededeten Schmiedeteile effektiv und hochwertig hergestellt. Beim Gesenkschmieden wird das Schmiedestück nahezu völlig von einer geschlossenen Werkzeugeinrichtung, dem Gesenk umschlossen. Dabei bestimmt insbesondere die von dem Formenbauer in das Gesenk eingebrachte Gravur die Form des fertigen ersten und zweiten Schmiedeteils.

Die hohe Qualität der erfindungsgemäßen Nabe war überraschend. Zwar wurden auch in früherer Zeit schon Naben geschmiedet, aber diese Naben benötigten sehr viel Nacharbeit. Das liegt unter anderem daran, dass dort das Schmieden oft per Hand ausgeführt wurde. Auch waren die Anforderung an Genauigkeit und Stabilität und Gewicht nicht so hoch, wie es heute der Fall ist. Deshalb wurde schon seit Jahrzehnten keine serientaugliche Nabe für ein sportliches Fahrrad oder ein Wettkampffahrrad mehr geschmiedet. Denn beim Schmieden von Hand ist nur eine sehr begrenzte Genauigkeit wirtschaftlich herstellbar.

Ein typisches Nabengehäuse kann eine geometrische Gestalt aufweisen, das durch eine zentrale Hülse gebildet wird, an deren Enden jeweils Nabenflansche vorgesehen sind. Derartige Nabenflansche können sich voll umfänglich erstrecken. Mit der erfindungsgemäßen Nabe wird nun eine Nabe vorgeschlagen, bei der das Nabengehäuse beispielsweise aus zwei Schmiedeteilen besteht, die miteinander verbunden werden. Dadurch ist es möglich, die beiden Teile des Nabengehäuses durch einen Schmiedevorgang herzustellen.

Dazu kann beispielsweise ein Rohling eingesetzt werden, der insbesondere durch Gesenkschmieden in vorzugsweise einem Arbeitsschritt spanlos umgeformt wird, sodass das erste Schmiedeteil entsteht. Durch einen entsprechenden weiteren Schmiedevorgang kann das zweite Schmiedeteil hergestellt werden. Die beiden Schmiedeteile können miteinander verbunden werden, um das Nabengehäuse herzustellen.

Durch die Zweiteilung des Nabengehäuses ist es konstruktiv möglich, jede Hälfte durch einen einzigen Schmiedevorgang herzustellen. Hinterschnitte oder dergleichen sind nicht nötig. Das Schmieden erlaubt auch eine wirtschaftliche Herstellung von "organischen" Formen, welche spanabhebend nur aufwändig und somit in der Regel nicht wirtschaftlich gefertigt werden können. Dies erlaubt neue Möglichkeiten bei der Formgebung und dem Design einer Nabe. Auch die Aerodynamik kann durch gestalterische Maßnahmen verbessert werden. Der Schmiedevorgag kann mehrere Schritte erfordern.

Jedes Schmiedeteile kann eine rohrartige Struktur umfassen. Durch die rohrartigen Strukturen der Schmiedeteile kann die Hülse zur Verfügung gestellt werden, die die beiden Enden des Nabengehäuses miteinander verbindet.

Vorzugsweise weisen das erste und auch das zweite Schmiedeteil jeweils wenigstens eine Vielzahl von Befestigungsflanschen zur Befestigung von Speicheneinheiten auf.

Vorzugsweise weist wenigstens ein Schmiedeteil eine Vielzahl von nach außen abstehenden Befestigungsflanschen zur Befestigung einer ganzzahligen vielfachen Anzahl von Speicheneinheiten aufweist. Möglich ist es beispielsweise, dass für jede einzelne Speichereinheit sich genau ein entsprechend kleiner Befestigungsflansch sich von der rohrartigen Struktur radial nach außen aus erstreckt.

Eine Speicheneinheit wird vorzugsweise aus wenigstens einem Speichennippel und einer Speiche gebildet. Möglich ist es, dass an beiden Enden der Speiche Speichennippel vorgesehen sind. Es ist auch möglich, dass ein Speichenende einen verdickten Speichenkopf aufweist, mit dem die Speiche an einer entsprechenden Aufnahme fest aufgenommen werden kann. Insbesondere ist es auch möglich, dass die Speicheneinheit verdrehsicher aufgenommen ist, wozu z.B. der Speichenkopf entsprechend gestaltet sein kann.

Hier ist es bevorzugt, dass die Befestigungseinrichtung bzw. ein Speichenflansch zur Befestigung eines Speichen- bzw. Nabennippels oder aber zur Befestigung eines Speichenkopfes vorgesehen und ausgebildet ist.

In einer solchen Ausgestaltung weisen das erste Schmiedeteil und das zweite Schmiedeteil Befestigungsflansche zur Befestigung von Speicheneinheiten auf.

Vorteilhafterweise weist das erste Schmiedeteil und auch das zweite Schmiedeteil jeweils wenigstens einen Lagersitz auf, um das jeweilige Schmiedeteil und das gesamte Nabengehäuse drehbar auf der Achse zu lagern.

Zur Erzielung einer hohen Präzision ist es bevorzugt, dass nach dem Schmiedevorgang wenigstens die Lagersitze spanend nachbearbeitet werden. Bevorzugt ist es auch, dass an der Befestigungseinrichtung Löcher gebohrt oder Nuten gefräst werden, um die Speichen entsprechend aufzunehmen. Eine weitere spanende Nachbearbeitung kann auf der Innenseite und im Verbindungsbereich mit der Hülse erfolgen.

Eine separate Nachbearbeitung der Befestigungseinrichtungen für die Speichen zur Reduktion des Gewichtes ist nicht nötig. Dadurch wird insgesamt ein sehr einfaches und effektives Fertigungsverfahren zur Verfügung gestellt, mit dem kostengünstig hoch qualitative und leichte Nabengehäuse hergestellt werden können. Gleichzeitig wird damit eine hohe Belastbarkeit des Nabengehäuses ermöglicht.

Zur axialen Fixierung der Lager, jeweils axial nach innen hin, können an dem ersten Schmiedeteil und/oder dem zweiten Schmiedeteil jeweils wenigstens ein Lagersitz vorgesehen sein.

Wenigstens ein Schmiedeteil kann eine Scheibenbremsenaufnahme umfassen, an der eine Scheibenbremse befestigt werden kann. Auch die Scheibenbremsenaufnahme wird vorzugsweise durch den Schmiedevorgang erzeugt. Die Anlagefläche der Bremsscheibe kann überdreht werden, um eine plane Anlagefläche zu gewährleisten.

Die erfindungsgemäße Nabe kann als Vorderradnabe oder auch als Hinterradnabe ausgebildet sein. Möglich sind angetriebene und nicht angetriebene Varianten.

Vorzugsweise ist die Hülse einteilig mit dem ersten und/oder dem zweiten Schmiedeteil gebildet. Besonders bevorzugt weist das erste und/oder das zweite Schmiedeteil eine rohrartige Struktur auf, die insbesondere zur Befestigung mit der Hülse oder dem anderen Schmiedeteil dient.

Vorzugsweise weist die Hülse wenigstens einen Aufsteckabschnitt auf. Wenn die Hülse als separates Teil vorgesehen ist, kann die Hülse an jedem Ende einen Aufsteckabschnitt aufweisen, der auf einen Einsteckabschnitt der ersten und/oder der zweiten rohrartigen Struktur aufgesteckt wird.

Möglich ist es auch, dass die Hülse wenigstens einen Einsteckabschnitt aufweist. Wenn die Hülse wiederum als separates Teil vorgesehen ist, kann die Hülse an einem oder beiden Enden einen Einsteckabschnitt aufweisen, der in einen Aufsteckabschnitt der ersten und/oder der zweiten rohrartigen Struktur eingesteckt wird.

Wenn die Hülse Teil eines Schmiedeteils ist, so wird die Hülse praktisch durch eine rohrartige Struktur des ersten und/oder des zweiten Schmiedeteils gebildet. Die jeweils andere rohrartige Struktur wird zur Verbindung der beiden Schmiedeteile in oder auf die eine rohrartige Struktur gesteckt, um beide Schmiedeteile miteinander zu verbinden.

Der Einsteckabschnitt und der Aufsteckabschnitt sind so bemessen, dass der Einsteckabschnitt in den Aufsteckabschnitt einführbar ist. Dadurch wird eine besonders einfache Verbindung ermöglicht. Durch die Abmessungen des Einsteckabschnittes und des Aufsteckabschnitts wird ein fester und zuverlässiger Sitz der Hülse und der rohrartigen Strukturen aufeinander ermöglicht. Zur Unterstützung und Gewährleistung der richtigen passgenauen Montage kann die Winkelausrichtung über entsprechende Klebelehren erfolgen.

Wenn beide Schmiedeteile jeweils eine rohrartige Struktur aufweisen, so ist vorzugsweise die rohrartige Struktur des ersten Schmiedeteils kürzer als die rohrartige Struktur des zweiten Schmiedeteils. Insbesondere ist die rohrartige Struktur des ersten Schmiedeteils weniger als halb so lang wie die rohrartige Struktur des zweiten Schmiedeteils. Dadurch wird eine hohe Stabilität bei geringem Gewicht erzielt. Weiterhin ergibt sich ein neues Design, welches durch gezielte und z.B. kontrastreiche Farbgestaltung auch völlig neue optische Gestaltungsmöglichkeiten ergibt. Außerdem ergeben sich Vorteile bei den Werkzeug- und Stückkosten.

Besonders bevorzugt überlappen sich die rohrartige Struktur und die Hülse bzw. die beiden rohrartigen Strukturen an einem Überlappungsabschnitt. Der Überlappungsabschnitt weist wenigstens einen Führungsabschnitt und wenigstens einen Klebeabschnitt auf.

Der Führungsabschnitt dient zur definierten Montage und Führung der beiden Schmiedeteile zueinander. Der Klebeabschnitt hingegen wird vorzugsweise mit wenigstens einem Kleber versehen und dient dazu, die erforderliche Klebekraft zu übertragen.

Der Führungsabschnitt ist vorzugsweise als Passsitz ausgebildet und besonders bevorzugt ist an dem Klebeabschnitt wenigstens ein radialer Abstand zwischen dem ersten Schmiedeteil und dem zweiten Schmiedeteil wenigstens abschnittsweise über dem Umfang vorgesehen. Der radiale Abstand ist vorzugsweise wenigstens teilweise mit wenigstens einer Klebemasse gefüllt. Besonders bevorzugt beträgt der radiale Abstand an dem Klebeabschnitt zwischen 0,05 mm und 1 mm und insbesondere zwischen 0,10 mm und 0,50 mm.

Durch die Kombination des Führungsabschnitts mit dem Klebeabschnitt ermöglicht der Überlappungsabschnitt eine hoch feste Verbindung der beiden Schmiedeteile miteinander oder mit der Hülse, während durch den Führungsabschnitt eine präzise und reproduzierbare Ausrichtung des ersten Schmiedeteils zu dem zweiten Schmiedeteil gewährleistet wird.

Das erfindungsgemäße Nabengehäuse besteht im Wesentlichen aus einem ersten Schmiedeteil und einem zweiten Schmiedeteil, wobei das erste und das zweite Schmiedeteil über eine Hülse miteinander verbunden sind. Es ist möglich, dass das erste und das zweite Schmiedeteil jeweils eine rohrartige Struktur umfassen, die zur Befestigung miteinander wenigstens teilweise ineinander angeordnet sind.

Das erfindungsgemäße Nabengehäuse stellt ein sehr belastbares Nabengehäuse zur Verfügung, welches ein geringes Eigengewicht aufweist. Die Herstellung ist einfach und kostengünstig, sodass mit einem geringeren Gewicht eine höhere Stabilität erzielbar ist.

Ein weiteres erfindungsgemäßes Nabengehäuse besteht im Wesentlichen aus einem einzigen Schmiedeteil, welches an beiden Enden Befestigungseinrichtungen für Speicheneinheiten umfasst. Vorzugsweise ist ein solches Nabengehäuse im Wesentlichen rohrartig ausgestaltet. Die Anmelderin behält sich vor, solche Nabengehäuse separat zu beanspruchen.

In allen Ausgestaltungen ist das Verhältnis von maximalem Außendurchmesser zu minimalem Innendurchmesser vorzugsweise zwischen 1,25 und 2, insbesondere zwischen 1,4 und 1,85. Wenn eine Scheibenbremsenaufnahme vorgesehen ist, beträgt das Verhältnis vorzugsweise zwischen 1,7 und 2,0. Ohne Scheibenbremsenaufnahme beträgt das Verhältnis vorzugsweise zwischen 1,3 und 1,7. Der maximale Außendurchmesser wird dabei über die Befestigungseinrichtungen gemessen. Insgesamt wird ein schlankes und rohrartiges Nabengehäuse zur Verfügung gestellt.

Das erfindungsgemäße Verfahren dient zur Herstellung einer Nabe mit einem Nabengehäuse und mit einer Achse und wenigstens einem Lager zur drehbaren Lagerung des Nabengehäuses, wobei zur Herstellung des Nabengehäuses aus einem ersten Rohling durch Gesenkschmieden ein erstes Schmiedeteil geformt wird. Aus einem zweiten Rohling wird durch Gesenkschmieden ein zweites Schmiedeteile geformt. Die beiden Schmiedeteile werden über eine Hülse miteinander verbunden. Bei dem Verfahre wird durch Gesenkschmieden wenigstens ein Schmiedeteil einer Vielzahl von nach außen abstehenden Befestigungsflanschen zur Befestigung von Speicheneinheiten versehen.

Dabei ist es möglich, dass die erste und die zweite rohrartige Struktur zur Befestigung miteinander wenigstens teilweise ineinander geschoben werden. Es ist auch möglich, dass die erste rohrartige Struktur und die zweite rohrartige Struktur miteinander verschraubt werden. Eine exakte winkelmäßige Ausrichtung der beiden Teile kann durch eine genaue Fertigung und/oder durch einen verstellbaren Anschlag und/oder ein Verkleben des Gewindes in der Passstellung gewährleistet werden.

Möglich ist es insbesondere auch, dass das erste Schmiedeteil und das zweite Schmiedeteil miteinander verklebt werden, um das Nabengehäuse herzustellen.

Insgesamt stellt die Erfindung eine vorteilhafte Nabe und ein vorteilhaftes Nabengehäuse zur Verfügung, welche kostengünstig zu fertigen sind und welche eine hohe Stabilität mit einem geringen Gewicht vereinbaren. Aufwändige spanende Nacharbeitungen zur Gewichtsreduktion sind nicht nötig.

Weitere vorteile und Merkmale der vorliegenden Erfindung ergeben sich aus den Ausführungsbeispielen, welche mit Bezug auf die beiliegenden Figuren im Folgenden erläutert werden.

In den Figuren zeigen:
- Fig. 1: ein erstes Fahrrad mit erfindungsgemäßen Naben in eine Seitenansicht;
- Fig. 2: ein Mountainbike mit erfindungsgemäßen Naben in einer Seitenansicht;
- Fig. 3: eine erste perspektivische Darstellung der Schmiedeteile einer erfindungsgemäßen Nabe;
- Fig. 4: eine andere perspektivische Darstellung der Schmiedeteile der erfindungsgemäßen Nabe nach Fig. 3;
- Fig. 5: einen Querschnitt durch die beiden Schmiedeteile der Nabe nach Fig. 3;
- Fig. 6: das montierte Nabengehäuse gem. Fig. 5;
- Fig. 7: eine vergrößerte schematische Darstellung des Überlappungsbereichs der beiden Schmiedeteile des Nabengehäuses nach Fig. 5; und
- Fig. 8: ein weiteres Nabengehäuse im Schnitt.

Mit Bezug auf die beiliegenden Figuren werden im Folgenden Ausführungsbeispiele von erfindungsgemäßen Naben 1 erläutert.

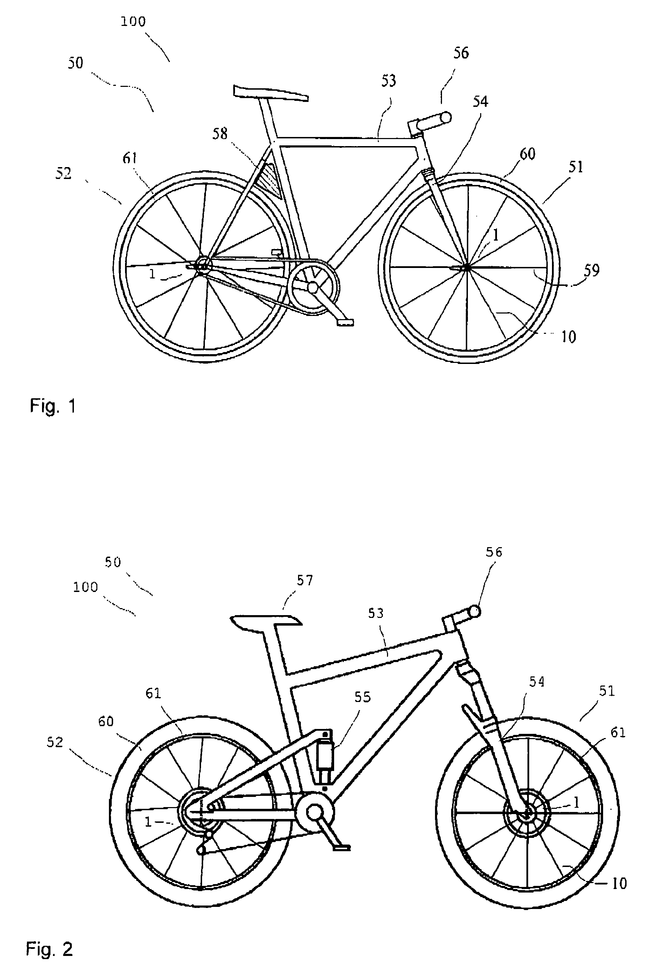

In Fig. 1 ist ein als Zweirad 50 und insbesondere als Rennrad ausgeführtes Fahrzeug 100 in einer schematischen Seitenansicht abgebildet. Das Fahrrad 50 ist wenigstens teilweise muskelbetrieben und kann über einen elektrischen Hilfsantrieb verfügen.

Das Rennrad ist in einer stark schematischen Seitenansicht abgebildet und weist ein Vorderrad 51 und ein Hinterrad 52 und einen Rahmen 53 auf. Ein Lenker 56 dient zur Steuerung und kann unterschiedlich ausgebildet sein.

Unterhalb des Sattels 57 kann eine Batterie 58 vorgesehen, die insbesondere bei elektrounterstützten Zweirädern Anwendung findet. Grundsätzlich kann eine solche Batterie 58 auch an anderen Stellen am Rahmen angebracht sein oder in den Rahmen integriert oder sonst wo untergebracht sein.

Bei dem Fahrrad gemäß Fig. 1 kann der Reifen 60 als schlauchloser Reifen ausgeführt und beispielsweise auf die Felge 61 aufgeklebt sein. Bei dem Vorderrad 51 und dem Hinterrad 52 ist die Felge 61 jeweils über Speicheneinheiten 10 mit Speichen 27 mit der Nabe verbunden.

Das Hinterrad 52 verfügt über eine erfindungsgemäße Nabe 1 als Hinterradnabe 3, während das Vorderrad mit einer Vorderradnabe 4 ausgerüstet ist.

In Fig. 2 ist ein Mountain-Bike-Fahrrad 50 in einer stark schematisierten Seitenansicht abgebildet, welches über ein Vorderrad 51 und ein Hinterrad 52, einen Rahmen 53, eine gefederte Vordergabel 54 und einen Hinterraddämpfer 54 verfügt. In diesem Ausführungsbeispiel sind Scheibenbremsen vorgesehen. An dem Hinterrad 52 ist eine erfindungsgemäße Nabe 1 als Hinterradnabe 3 und an dem Vorderrad 51 ist eine Vorderradnabe 4 als Nabe 1 vorgesehen.

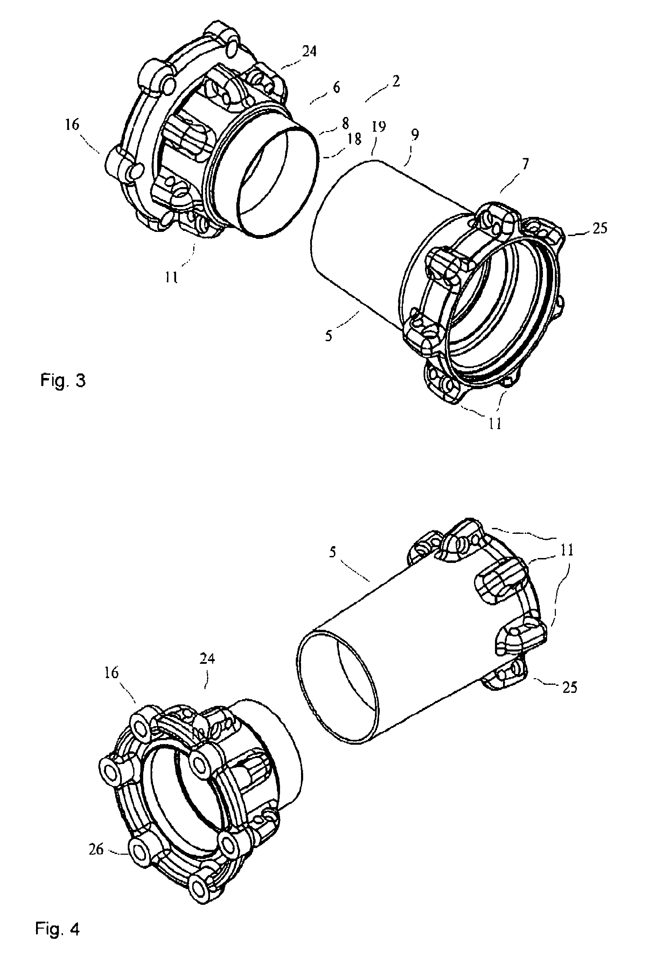

Figur 3 zeigt eine perspektivische Ansicht des Nabengehäuses 2 einer Nabe des Fahrrads nach Fig. 1 oder 2.

Das Nabengehäuse 2 besteht aus einem ersten Schmiedeteile 6 und einem zweiten Schmiedeteil 7. Das Schmiedeteil 6 umfasst hier eine rohrartige Struktur 8 und das Schmiedeteil 7 umfasst eine rohrartige Struktur 9. Die rohrartigen Strukturen 8 und 9 weisen zylindrische oder wenigstens etwa zylindrische Abschnitte auf, wobei der zylindrische Abschnitt an der rohrartigen Struktur 8 weniger als halb so lang ist wie der zylindrische Bereich an der rohrartigen Struktur 9.

Durch die rohrartigen Strukturen 8 und 9 wird eine Hülse 5 gebildet, über welche die beiden Schmiedeteile miteinander verbunden werden.

Sowohl das erste Schmiedeteil 6 als auch das zweite Schmiedeteil 7 weisen Befestigungsmöglichkeiten für Speicheneinheiten 10 auf. Dabei ist es möglich, dass an den Schmiedeteilen 6, 7 Nabennippel angeordnet werden. Es ist aber auch möglich, dass Speichenköpfe von Speichen 27 der Speicheneinheiten 10 an der Befestigungseinrichtung 24 bzw. Befestigungseinrichtung 25 befestigt werden.

Die Befestigungseinrichtungen 24 und 25 sind hier als separate Befestigungsflansche ausgebildet, die sich hier etwa radial nach außen von dem ersten Schmiedeteil 6 bzw. dem zweiten Schmiedeteil 7 erstrecken. Es ist auch möglich, dass die Befestigungseinrichtungen 24 und 25 als umlaufende Nabenflansche ausgebildet sind.

Zur Befestigung der beiden rohrartigen Strukturen 8 und 9 miteinander weist das erste Schmiedeteil 6 einen Einsteckabschnitt 18 an der rohrartigen Struktur 8 auf, der in einem Aufsteckabschnitt 19 der rohrartigen Struktur 9 eingeführt wird.

Das Schmiedeteil 6 weist hier im Ausführungsbeispiel eine Scheibenbremsenaufnahme 16 auf, an der eine Scheibenbremse angeschraubt werden kann.

Fig. 4 zeigt eine weitere perspektivische Ansicht des Nabengehäuses 2 nach Fig. 3, wobei hier die axiale Ausgestaltung der Befestigungsflansche 11 auf dem ersten und dem zweiten Schmiedeteile 6, 7 sichtbar ist. Durch diese Ausgestaltung kann auf einfache Art und Weise beginnend von einem beispielsweise ringförmigen Rohling das vollständige erste Schmiedeteil 6 und/oder das zweite Schmiedeteil 7 über einen Schmiedevorgang hergestellt werden. Durch den Schmiedevorgang entsteht eine hoch feste Struktur, sodass relativ geringe Wandstärken möglich sind.

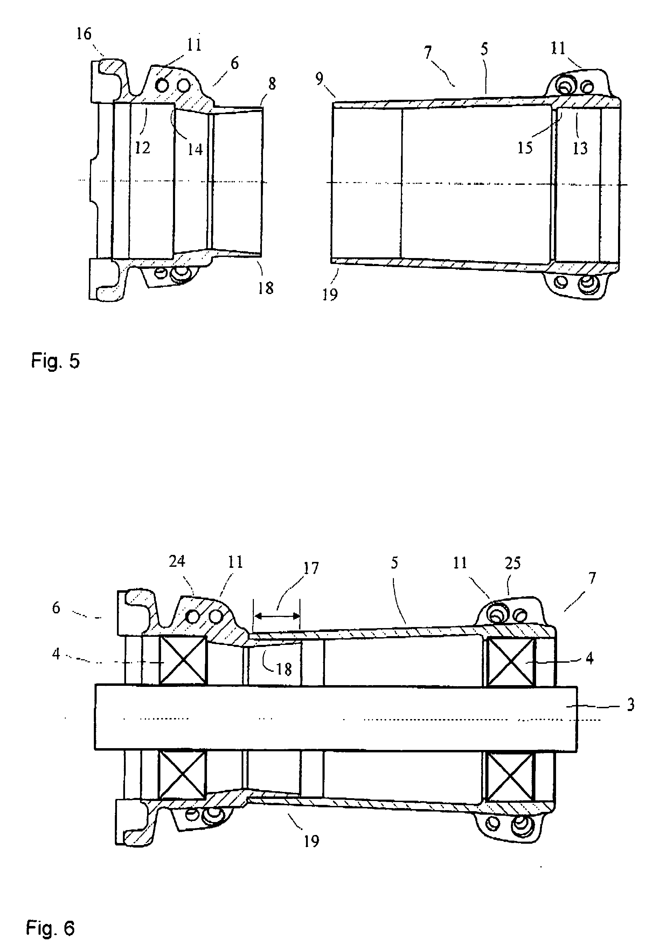

Fig. 5 zeigt einen Querschnitt durch das erste Schmiedeteil 6 und das zweite Schmiedeteil 7, wobei die beiden Schmiedeteile 6 und 7 voneinander beabstandet angeordnet sind. Dies ist beispielsweise die Situation kurz vor der Montage. Die Befestigungsflansche 11 weisen Löcher zur Aufnahme der Speichen auf, die nach dem Schmieden eingebracht wurden. Im Inneren der Schmiedeteile 6 und 7 sind Lagersitze 12 und 13 vorgesehen.

Ein Absatz 14 in ersten Schmiedeteil 6 dient zur axialen Fixierung des Lagers 4 an dem Lagersitz 12.

Der Absatz 15 in dem zweiten Schmiedeteil 7 dient zur axialen Fixierung des Lagers 4 an dem Lagersitz 13.

Fig. 6 zeigt den montierten Zustand, wobei stark schematisch Lager 4 und eine Achse 3 eingezeichnet sind.

Die hier durchgehende Achse 3 kann als Hohlachse oder aber auch als Vollachse ausgebildet sein.

Deutlich erkennbar ist, dass sich das erste Schmiedeteil 6 und das zweite Schmiedeteil 7 in dem Überlappungsbereich 17 überlappen. Dort ist der Einsteckabschnitt 18 des ersten Schmiedeteils 6 in den Aufsteckabschnitt 19 des zweiten Schmiedeteils eingeführt, sodass eine feste Verbindung des ersten und des zweiten Schmiedeteils 6, 7 vorliegt.

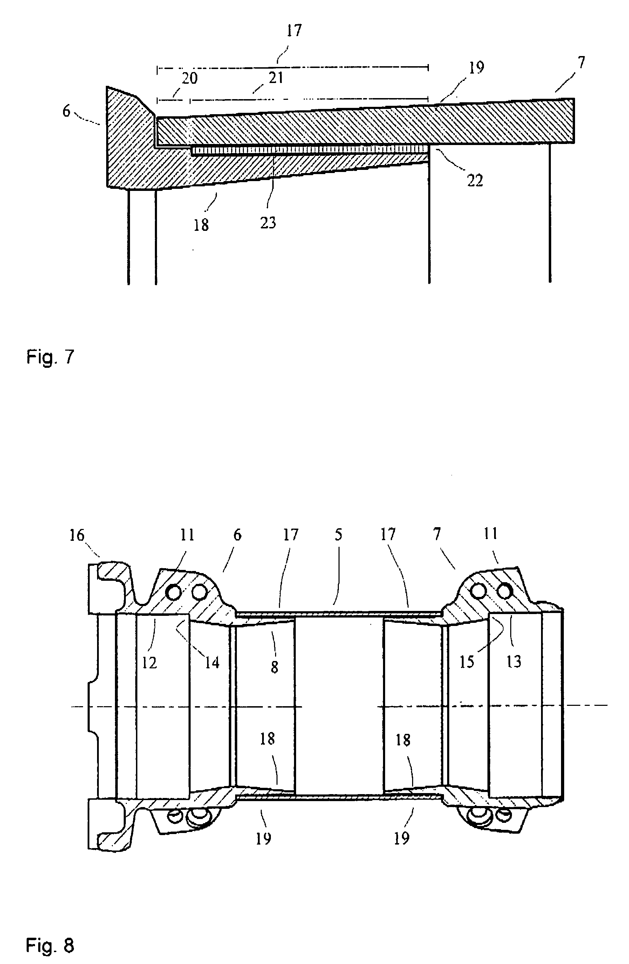

Fig. 7 zeigt in einer vergrößerten Darstellung den Überlappungsbereich 17 mit dem ersten Schmiedeteil 6 und dem zweiten Schmiedeteil 7. Der Überlappungsbereich 17 erstreckt sich über eine gewisse axiale Strecke, die sich aus dem Führungsabschnitt 20 und dem Klebeabschnitt 21 zusammensetzt.

In anderen Ausgestaltungen ist es auch möglich, dass zwei oder mehr Führungsabschnitte und zwei oder mehr Klebeabschnitte vorgesehen sind. Möglich ist es beispielsweise, dass zwei Führung- und zwei Klebeabschnitte oder zwei Führungs- und ein Klebeabschnitt abwechselnd vorgesehen sind.

Der Führungsabschnitt 20 ist als Passsitz ausgeführt, sodass die beiden Schmiedeteile 6 und 7 dort passgenau zueinander ausgerichtet werden.

In dem Klebeabschnitt 21 liegt ein radialer Abstand 22 zwischen dem Außendurchmesser des Einsteckabschnitts 18 und den Innendurchmesser des Aufsteckabschnitts 19 vor. Dieser radialer Abstand 22 ist hier durch eine Klebemasse 23 gefüllt, die vor dem Verbinden der beiden Schmiedeteile 6 und 7 aufgebracht wird. Nach dem Aushärten der Klebemasse 23, die aus einem oder mehreren Klebstoffen bestehen kann, liegt eine feste Verbindung der beiden Schmiedeteile 6 und 7 vor, die eine dauerhaft sichere Verbindung gewährleistet. Durch den relativ geringen radialen Spalt 22 bedingt, ergibt sich eine hohe Klebestärke und ein zuverlässiger Sitz.

Fig. 8 zeigt eine andere Variante eines Nabengehäuses 2, welches hier dreiteilig ausgebildet ist. Das erste Schmiedeteil 6 und das zweite Schmiedeteil 7 werden über hier eine separate Hülse 5 miteinander verbunden. Hier weisen beide Enden der Hülse 5 Aufsteckabschnitte 19 auf, während die rohrartigen Strukturen 8 und 9 der Schmiedeteile 6 und 7 Einsteckabschnitte 18 aufweisen. Es ergeben sich Überlappungsabschnitte 17 an beiden Ende der Hülse 5.

Die separate Hülse kann aus einem Leichtmetall oder aber auch aus einem Faserverbundwerkstoff bestehen.

Möglich ist es auch, dass das Nabengehäuse 2 im Wesentlichen und insbesondere vollständig aus einem einzigen Schmiedeteil besteht, welches an beiden Enden Befestigungseinrichtungen für Speicheneinheiten umfasst. Dabei können die Befestigungseinrichtungen an umlaufenden Speichenflanschen ausgebildet sein oder aber so ausgebildet sein, wie es in den Figuren abgebildet ist.

Durch die Erfindung wird eine stabile und leichte Nabe zur Verfügung gestellt, die einfach zu fertigen ist und nur eine geringe Nachbearbeitung erfordert. Dadurch kann eine sehr hoch qualitative Nabe kostengünstiger als bisher hergestellt werden, während gleichzeitig die Stabilität zunimmt.

Bei der Nabe kann eine Scheibenbremsenaufnahme 16 integriert werden. Möglich ist es auch, an beiden axialen Enden jeweils eine Scheibenbremsenaufnahme 16 vorzusehen. Der Durchmesser im Bereich der Befestigungseinrichtungen für die Speicheneinheiten kann gering gehalten werden, was Gewichtsvorteile bewirkt. Dadurch und auch durch die rohrartige Struktur können die Kosten für das benötigte Werkzeug gering gehalten werden.

Bei zwei unsymmetrischen Schmiedeteilen ergeben sich Festigkeitsvorteile, Kostenvorteile für das benötigte Werkzeug und gestalterische Vorteile.

Ein weiterer erheblicher Vorteil ist, dass die Nabe kompatibel mit Speichen ohne nabenseitiges Gewinde ist. Die Befestigungseinrichtungen 24, 25 müssen nicht mit Innengewinden versehen werden, um die Speichenenden dort zu befestigen. Nabennippel können - müssen aber nicht - eingesetzt werden. Grundsätzlich ist der Einsatz konventioneller Speichen mit abgewinkeltem Kopf möglich.

Durch einen Überlappungsabschnitt 17 mit einem Führungsabschnitt 20 und einem Klebeabschnitt 21 wird eine präzise und einfach zu montierende Nabe zur Verfügung gestellt.

### Bezugszeichenliste:

| | | | |
|---|---|---|---|
| 1 | Nabe | 20 | Führungsabschnitt |
| 2 | Nabengehäuse | 21 | Klebeabschnitt |
| 3 | Nabenachse | 22 | radialer Abstand |
| 4 | Lager | 23 | Klebemasse |
| 5 | Hülse | 24 | Befestigungseinrichtung |
| 6 | erstes Schmiedeteil | 25 | Befestigungseinrichtung |
| 7 | zweites Schmiedeteil | 50 | Fahrrad |
| 8 | rohrartige Struktur | 51 | Vorderrad |
| 9 | rohrartige Struktur | 52 | Hinterrad |
| 10 | Speicheneinheit | 53 | Rahmen |
| 11 | Befestigungsflansch | 54 | Gabel |
| 12 | Lagersitz | 55 | Hinterraddämpfer |
| 13 | Lagersitz | 56 | Lenker |
| 14 | Absatz | 57 | Sattel |
| 15 | Absatz | 58 | Batterie |
| 16 | Scheibenbremsenaufnahme | 59 | Speiche |
| 17 | Überlappungsabschnitt | 60 | Reifen |
| 18 | Einsteckabschnitt | 61 | Felge |
| 19 | Aufsteckabschnitt | 100 | Fahrzeug |

## Patentansprüche

1. Nabe (1) für wenigstens teilweise muskelbetriebene Fahrzeuge (100) und insbesondere Zweiräder (50) mit einem Nabengehäuse (2) und mit einer Achse (3) und wenigstens einem Lager (4) zur drehbaren Lagerung des
Nabengehäuse (2),
**dadurch gekennzeichnet,**
**dass** das Nabengehäuse ein erstes Schmiedeteil (6) und wenigstens ein zweites Schmiedeteil (7) umfasst, wobei das erste und das zweite Schmiedeteil (6, 7) über wenigstens eine Hülse (5) miteinander verbunden sind und dass wenigstens ein Schmiedeteil (6, 7) eine Vielzahl von nach außen abstehenden Befestigungsflanschen (11) zur Befestigung von Speicheneinheiten (10) aufweist.

2. Nabe (1) nach Anspruch 1, wobei das erste und das zweite Schmiedeteil (6, 7) jeweils wenigstens eine Befestigungseinrichtung (24, 25) für eine Speicheneinheit (10) aufweisen.

3. Nabe (1) nach einem der vorhergehenden Ansprüche, wobei das erste und/oder das zweite Schmiedeteil (6, 7) wenigstens einen Lagersitz (12, 13) aufweist und wobei insbesondere wenigstens ein Schmiedeteil (6, 7) einen Absatz (14, 15) zur axialen Fixierung des Lagers aufweist.

4. Nabe (1) nach einem der vorhergehenden Ansprüche, wobei wenigstens ein Schmiedeteil (6, 7) eine Scheibenbremsenaufnahme (16) umfasst.

5. Nabe (1) nach einem der vorhergehenden Ansprüche, wobei die Hülse (5) einteilig mit dem ersten und/oder dem zweiten Schmiedeteile (6, 7) gebildet ist.

6. Nabe (1) nach einem der vorhergehenden Ansprüche, wobei das erste und/oder das zweite Schmiedeteil (6) eine rohrartige Struktur (8, 9) aufweist.

7. Nabe (1) nach dem vorhergehenden Anspruch, wobei wenigstens eine rohrartige Struktur (8, 9) einen Einsteckabschnitt (18) oder einen Aufsteckabschnitt (19) umfasst.

8. Nabe (1) nach einem der beiden vorhergehenden Ansprüche, wobei die rohrartige Struktur (8) des ersten Schmiedeteils (6) kürzer ist als die rohrartige Struktur (9) des zweiten Schmiedeteils (7), wobei insbesondere die rohrartige Struktur (8) des ersten Schmiedeteils (6) weniger als halb so lang ist wie die rohrartige Struktur (9) des zweiten Schmiedeteils (7).

9. Nabe (1) nach einem der drei vorhergehenden Ansprüche, wobei sich die Hülse und wenigstens eine rohrartige Struktur (8, 9) an wenigstens einem Überlappungsabschnitt (17) überlappen.

10. Nabe (1) nach dem vorhergehenden Anspruch, wobei an dem Überlappungsabschnitt (17) wenigstens ein Führungsabschnitt (20) und wenigstens ein Klebeabschnitt (21) vorgesehen sind.

11. Nabe (1) nach dem vorhergehenden Anspruch, wobei der Führungsabschnitt (20) als Passsitz ausgebildet ist.

12. Nabe (1) nach einem der beiden vorhergehenden Ansprüche, wobei an dem Klebeabschnitt (21) wenigstens ein radialer Abstand (22) zwischen dem ersten Schmiedeteil (6) und dem zweiten Schmiedeteil (7) vorgesehen ist, der wenigstens teilweise mit wenigstens einer Klebmasse (23) gefüllt ist.

13. Verfahren zur Herstellung einer Nabe mit einem Nabengehäuse und mit einer Achse (3) und wenigstens einem Lager (4) zur drehbaren Lagerung des Nabengehäuses (2), wobei zur Herstellung des Nabengehäuses (2) aus einem ersten Rohling durch Gesenkschmieden ein erstes Schmiedeteil (6) geformt wird und wobei aus einem zweiten Rohling durch Gesenkschmieden ein zweites Schmiedeteil (7) geformt wird, wobei das erste Schmiedeteil (6) und das zweite Schmiedeteil (6) über eine Hülse miteinander verbunden werden und wobei durch Gesenkschmieden wenigstens ein Schmiedeteil. (6, 7mit) einer Vielzahl von nach außen abstehenden Befestigungsflanschen (11) zur Befestigung von Speicheneinheiten (10) versehen wird.

14. Verfahren nach dem vorhergehenden Anspruch, wobei das erste Schmiedeteil (6) und das zweite Schmiedeteil (7) miteinander verklebt und/oder verschraubt werden.

15. Verfahren nach dem vorhergehenden Anspruch, wobei das erste Schmiedeteil (6) und/oder das zweite Schmiedeteil (7) mit der Hülse verklebt und/oder verschraubt werden.
